(19)

Europäisches
Patentamt
European
Patent Office
Office européen
des brevets

(11) **EP 2 824 624 A1**

(12) **EUROPEAN PATENT APPLICATION**

(43) Date of publication:
**14.01.2015  Bulletin 2015/03**

(21) Application number: **13290165.3**

(22) Date of filing: **12.07.2013**

(51) Int Cl.:
*G06Q 20/02* (2012.01)     *G06Q 20/04* (2012.01)
*G06Q 20/12* (2012.01)     *G06Q 30/06* (2012.01)
*G06Q 40/08* (2012.01)     *G06Q 40/02* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Amadeus S.A.S.
06410 Biot (FR)**

(72) Inventors:
 • **Canis, Laure
  06300 Nice (FR)**

 • **Florimond, Cedric
  06220 Valbonne (FR)**
 • **Bisogni, Simone
  06000 Nice (FR)**
 • **Bonnet, Marion
  91128 Palaiseau (FR)**

(74) Representative: **Samson & Partner
Widenmayerstraße 5
80538 München (DE)**

(54) **Fraud management system and method**

(57)    The present invention relates to a computer-implemented fraud method and system for managing fraud screening in response to a requested transaction. The fraud management system checks the efficiency of the fraud screening strategy and predicts the efficiency of new fraud screening strategies based on the total cost of fraud. This calculation is facilitated, because transactions are divided into groups, and the total cost of fraud may be calculated for a representative element of the group, and not for each transaction in the group. Furthermore, if the fraud screening is based on rules that apply an acceptance flow to predetermined conditions, the fraud management can choose the best acceptance flow for these predetermined conditions by minimizing the total cost of fraud. Finally, the fraud management can also flag inefficient rules thanks to an indicator related to the total cost of fraud to highlight rules whose predetermined conditions should be changed.

FIG. 1

**EP 2 824 624 A1**

**Description**

**CROSS REFERENCE TO RELATED APPLICATIONS**

This application is related to co-pending application no. 13/786,497 titled "Fraud Decision Processing System and Method", the content of which is incorporated by reference in its entirety.

**TECHNICAL FIELD**

The present invention relates to a method and a system to perform fraud screening for any type of transaction request.

**BACKGROUND**

Merchants need to reduce the number of fraudulent transactions because when a fraud occurs, they are responsible for reimbursing the amounts of fraudulent transactions to the real credit card holder. Thus, a payment system performs a fraud screening to reduce fraud. Based on transaction information such as the amount of the transaction, location of the sale, IP address of the requesting device (for an online payment), whether the credit card is on a black list and even data on repeated transactions with the same credit card number, email, or name (velocity checks), the fraud screening service provider may deny the requested transaction, allow the requested transaction, or direct the requester for manual review. For a manual review, the system waits for additional information.
In an example of airline ticket purchase, the transaction information may further include the origin, destination, and time before departure.
Usually the rules of the fraud screening system are adjusted ad-hoc, based on disparate data such as the rates of false negatives, false positives, and manual review. We propose a way to evaluate a posteriori and a priori the efficiency of a fraud screening strategy based on the calculation of the expected total costs of fraud, and provide recommendations on how to adjust this strategy.
The total costs of fraud includes cost of false negatives (which may include ticket reimbursement and chargeback processing), cost of false positives (which may include lost sales), and other fraud related costs (which may include challenge processing and cost of a fraud screening engine, and even merchant fees). Currently, this total costs of fraud contains uncertainty and is difficult to assess.

**SUMMARY**

In general, a method and system for computer-implemented fraud management system is provided. The fraud management system may monitor the efficiency of a given fraud screening strategy, predict the efficiency of a new fraud screening strategy and compare strategies, identify fraud screening strategies' least efficient rules, and may complete the associated computations to provide these results with a minimal response time to user requests. The user may then choose to directly apply a recommended fraud screening strategy and/or redefine rules that have been flagged by the system as least efficient. This is particularly relevant to large merchants who spend a significant number of resources dedicated to their fraud management, and in the travel industry, where large amounts are at stake.
The system may define a total cost of fraud measure based on user inputs and historical data. Based on this measure, the system may facilitate the monitoring of the efficiency of an existing fraud management strategy, and predicting the efficiency of new fraud management strategies by identifying fraud management strategies' least efficient rules.
The system may provide a process for minimizing response time by pre-sorting transactions into groups, performing minimization of total costs of fraud calculations, and sampling fraud screening requests to improve speed of calculation while maintaining precision. For this purpose, the fraud management system may create an expected total costs of fraud calculation engine, which may deal with current state of knowledge and uncertainties based on historical data and user input.
In one aspect, in order to ensure minimal response time to user requests, the total costs of fraud may not be calculated for each of the requested transactions. The requested transactions may be grouped into a plurality of groups of requested transactions, and the total costs of fraud may be calculated for one of the group of requested transactions. The requested transactions may be grouped based on transaction information. The transaction information may include a value of the requested transaction and/or a date of the requested transaction. If the user request is to monitor the performance of an old strategy, the requested transactions may be grouped based on one of the following criteria: the number of fraud screens performed, a number of payment instrument authentications performed, whether a challenge with manual review was performed, the date of the request, the range of ticket amount, whether the requested transaction was allowed. If the user request is to predict the performance of a new strategy, the requested transactions may be grouped also depending on the acceptance flows to be tested.

In another aspect, if the user request is to predict the performance of a new strategy, there may be a sampling of the fraud screenings. Eventually all fraud screenings will be performed, but at a given point in time, the performed fraud screenings will be split across groups according to their sizes.

In another aspect, the computer-implemented fraud management system may determine the optimal acceptance flow for a set of transactions verifying certain conditions. The system may therefore modify a fraud screening rule by changing the acceptance flow corresponding to this rule. The acceptance flow may include one of the following, accepting the requested transaction, rejecting the requested transaction, and challenging the requested transaction. The acceptance flow may also include performing a payment instruction authentication before making a final decision.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The details of one or more embodiments are set forth in the following detailed description of the invention and the accompanying drawings. Other objectives, features, and advantages of the invention will be more readily understood upon consideration of the following Detailed Description of the invention, taken in conjunction with the accompanying drawings, and with the claims.

## DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:

FIG. 1 illustrates a computer-implemented fraud management system.
FIG. 2 illustrates an operation flow of a requested transaction using a fraud screening and a payment instrument authentication.
FIG. 3 illustrates a flow diagram of the process of calculating probabilities based on historical data, storing these probabilities in a database, and dynamically updating the probabilities.

## DETAILED DESCRIPTION OF EXEMPLARY EMBODIMENTS

A detailed explanation of the system and method according to the preferred embodiments of the present invention are described below.

The embodiments may take the form of a hardware embodiment, a software embodiment, or an embodiment combining software and hardware. In one embodiment, the computer-implemented fraud management system may take the form of a computer-program product that includes computer-useable instructions embodied on one or more computer-readable media.

The various fraud management systems and methods described herein can be implemented in part or in whole using computer-based systems and methods. Additionally, computer-based systems and methods can be used to augment or enhance the functionality described herein, increase the speed at which the functions can be performed, and provide additional features and aspects as a part of or in addition to those described elsewhere in this document. Various computer-based systems, methods and implementations in accordance with the described technology are presented below.

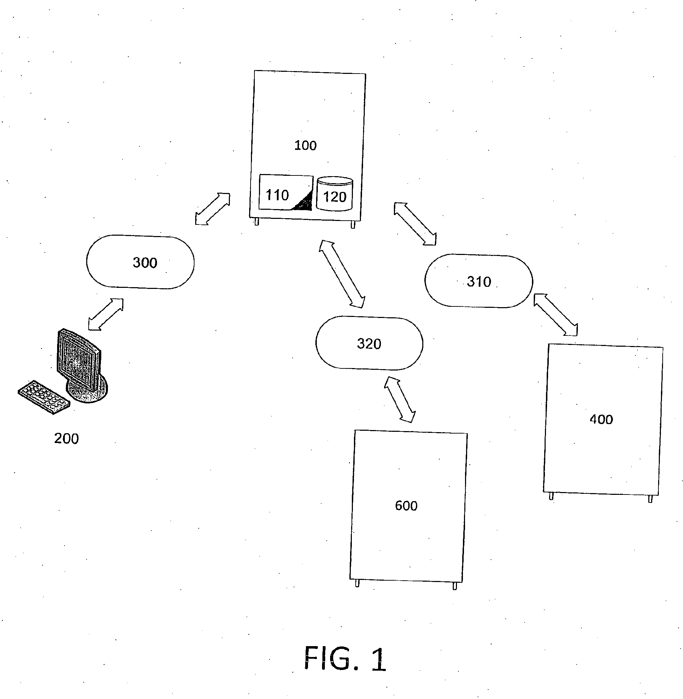

FIG. 1 is an embodiment of a fraud management system. The system may calculate, store, and update a total costs of fraud database, and may apply fraud management rules and flows based in part on the total costs of fraud database.

Referring to the computer-implemented fraud management system of FIG 1, the server 100, the client device, which may be a terminal 200, and the processor 110, may include a general-purpose computer and can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein for lyric and multimedia customization, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP). One or more of the application programs can be installed on the internal or external storage of the general-purpose computer. Alternatively, in another embodiment, application programs can be externally stored in or performed by one or more device(s) external to the general-purpose computer.

In addition, client device, which may be a terminal 200, may be or can include a desktop computer, a server, a laptop computer or other mobile computing device, a network-enabled cellular telephone (with or without media capturing/playback capabilities), wireless email client, or other client, machine or device to perform various tasks including Web browsing, search, electronic mail (email) and other tasks, applications and functions.

The general-purpose computer may include a central processing unit (CPU) for executing instructions in response to commands, and a communication device for sending and receiving data. One example of the communication device is a modem. Other examples include a transceiver, a communication card, a satellite dish, an antenna, a network adapter, or some other mechanism capable of transmitting and receiving data over a communications link through a wired or wireless data pathway.

The general-purpose computer may also include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices may themselves include the functionality of the general-purpose computer. For example, the mobile phone or the PDA may include computing and networking capabilities and function as a general purpose computer by accessing a network and communicating with other computer systems. Examples of a network, such as network 300, include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more networks.

In one implementation, a processor-based system of the general-purpose computer may include a main memory, preferably random access memory (RAM), and can also include a secondary memory, which may be a tangible computer-readable medium 120. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive can read from or write to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory may include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

Referring to FIG. 1, network 300 (also 310 and 320) may also include a communications interface that allows software and data to be transferred between terminal 200, server 100, and the other components shown in system 100. The system components may also be stand-alone components that can communicate with each other, a centralized server 100, and/or the client device over network 300. Examples of communications interfaces can include a modem, a network interface (such as, for example, an Ethernet card), a communications port, and a PCMCIA slot and card. Software and data transferred via a communications interface may be in the form of signals, which can be electronic, electromagnetic, optical or other signals capable of being received by a communications interface. These signals may be provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer readable medium" are generally used to refer to media such as a removable storage device, a disk capable of installation in a disk drive, and signals on a channel. These computer program products may provide software or program instructions to a computer system.

Computer-readable media include both volatile and nonvolatile media, removable and non-removable media, and contemplate media readable by a database, a switch, and various other network devices. Network switches, routers, and related components are conventional in nature, as are means of communicating with the same. By way of example, and not limitation, computer-readable media include computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, DVD, holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. An exemplary modulated data signal includes a carrier wave or other transport mechanism. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

Computer programs may be associated with applications and may be stored in the main memory or secondary memory. Such computer programs can also be received via a communications interface. Such computer programs, when executed, may enable the computer system to perform the features as discussed herein. In particular, the computer programs, when executed, may enable the processor to perform the described techniques. Accordingly, such computer programs may represent controllers of the computer system.

In an embodiment where the elements are implemented using software, the software may be stored in, or transmitted via, a computer program product and loaded into a computer system using, for example, a removable storage drive, hard drive or communications interface. The control logic (software), when executed by the processor, may cause the processor to perform the functions of the techniques described herein.

In another embodiment, the elements may be implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements may be implanted using a combination of both hardware and software.

Referring to FIG. 1, the computer-based methods can be accessed or implemented over the World Wide Web by providing access via a Web Page to the methods described herein. Accordingly, the Web Page may be identified by a Universal Resource Locator (URL). The URL may denote both a server and a particular file or page on the server. In this embodiment, it is envisioned that a client computer system, which may be the client device 106, may interact with a browser to select a particular URL, which in turn may cause the browser to send a request for that URL or page to the server identified in the URL. Typically, the server may respond to the request by retrieving the requested page and transmitting the data for that page back to the requesting client computer system, which may be the client device 106 (the client/server interaction may be typically performed in accordance with the hypertext transport protocol or HTTP). The selected page may then be displayed to the user on the client's display screen. The client can then cause the server containing a computer program to launch an application, for example, to perform an analysis according to the described techniques. In another implementation, the server can download an application to be run on the client to perform an analysis according to the described techniques.

Referring to FIG. 1, a payment server 100, which may incorporate a fraud management engine, may include a processor 110 and a tangible computer-readable medium 120, such as a disk drive or a flash memory system. The tangible computer-readable medium 120 stores programming which directs the processor and the payment server 100 to perform functions discussed below. The server 100 communicates with a terminal 200 via, e.g., a network 300. The network 300 may be, e.g., the internet. The network 300 may also be a proprietary or local network. The payment server 100, by the operation of the processor 1 10 and tangible computer-readable medium 120, receives request for a transaction (e.g., buying an airline ticket) and transaction information from the terminal 200 via the network 300. The terminal 200 may be, e.g., a merchant terminal (e.g. airline sales terminal) or a merchant's server.

The payment server 100 (incorporating the fraud management engine) may communicate with a fraud screening service provider server 400 via, e.g., a network 310. The network 310 may be, e.g., the internet a proprietary network, or a local network. Upon receiving the request for transaction, the payment server 100 performs the fraud screening, by the operation of the processor 110 and tangible computer-readable medium 120, by communicating with the fraud screening service provider 400 via the network 310. The payment server 100 may performs the fraud screening by sending the requested transaction and transaction information to the fraud screening service provider server 400, and receives a result of the fraud screening from the fraud screening service provider server 400. In another embodiment, the payment server 100 includes the fraud screening engine and performs the fraud management.

The fraud screening service provider server 400 transmits a result of the fraud screening back to the payment server 100. Based on the result, the payment server may issue to the terminal 200 a determination to allowing the requested transaction, rejecting the requested transaction, or requesting more information. In the case of gathering more information through manual review, the payment server 100 waits for additional information from the terminal 200.

Another type of information gathering is an authentication of the payment instrument, such as a credit card or debit card. An example of such authentication is the 3-D Secure® authentication protocol developed by Visa@ and adopted by MasterCard®. In one implementation, a password is provided to the user for authentication. One added feature of this type of authentication is the shift in fraud cost. When the payment instrument is enrolled in the 3-D Secure® authentication program and that authentication is performed, the total costs of fraud is shifted to the issuing bank of the instrument. Thus, merchants are willing to use the 3-D Secure® authentication.

The system may include the terminal 200 communicating with an authentication service provider server 600, via a network 320. In the 3-D Secure® authentication program, the authentication service provider server 600 may be the issuing bank of the payment instrument (e.g. credit card), or a service provider contracted by the issuing bank. The network 320 may be, e.g., the internet, a proprietary, or a local network.

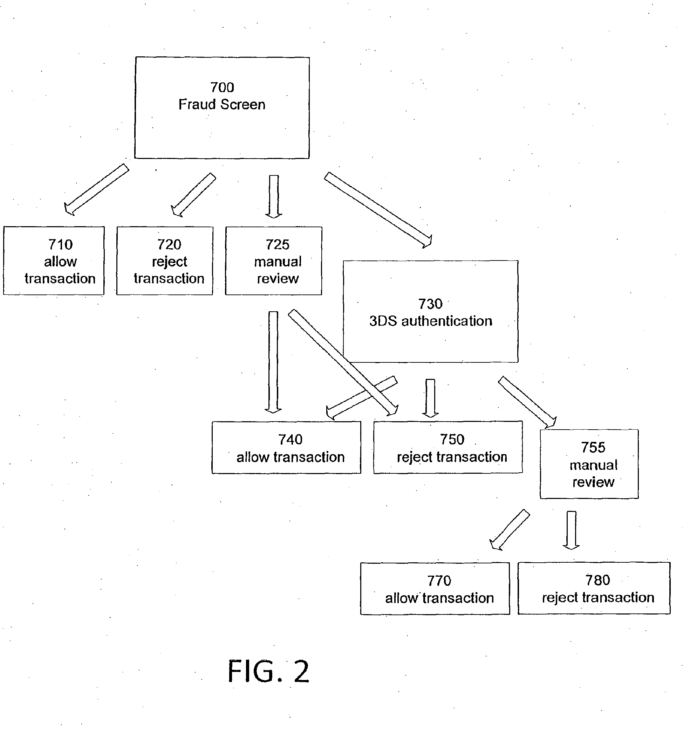

FIG. 2 illustrates an operation flow of a requested transaction using fraud screening and payment instrument authentication (e.g., 3D-Secure®). At 700, the system may perform the initial fraud screening. The possible operation flow of responses (i.e., ordered steps) includes allowing the transaction (710), rejecting the transaction (720) ,performing the 3DS authentication (730), and performing manual review (725). The fraud screening may be predictive, or the system may attribute a probability by default based on whether a transaction has been accepted or denied, before any chargeback information has been received.

As a result for of the manual review, the system may determine to allow the transaction (740) or to reject the transaction (750).

As a result of the 3DS authentication (730), the system may determine to allow the transaction (740), reject the transaction (750), or perform manual review (755). This manual review (755) may result in allowing the transaction (770) or rejecting the transaction (780).

The server 100 further includes a fraud management engine that creates, stores, and updates a total costs of fraud database to improve the fraud screening efficiency using the calculated total costs of fraud. The database may be store in the tangible computer-readable medium 120.

Fraud Screening needs to minimize false negatives (failing to detect a fraudulent transaction request) and false positives (falsely identify legitimate transaction requests as fraudulent). However it is hard to balance the two without knowing their economic impact in terms of costs.

The total costs of fraud is a unique measure to perform this balancing, which may include the following variables:

- Fraud reimbursement cost: cost for the merchant of reimbursing fraudulently authorized transactions for which he is liable. In the example of purchasing an airline ticket, the fraud reimbursement cost is the ticket value.
- Chargeback cost: when a chargeback is received, the merchant might spend some time processing it and inquiring on it. This time can be translated into human labor costs. Furthermore, the merchant might incur a penalty from his bank for each chargeback received, because received chargebacks also trigger manual work on the bank's end.
- Challenge cost: cost of performing additional checks by manual reviews.
- Lost sales: gross margin from sales that are not made because a non-fraudulent transaction is erroneously rejected times the probability that a rejected customer will not try to purchase the ticket again
- 3D-Secure® cost: cost of performing 3D-Secure® (e.g., a payment instrument authentication).
- Fraud screening cost: cost of performing a fraud screening.

One way of calculating the total costs of fraud is by scenario. An example of a scenario includes the possible responses and elements in fraud management of a requested transaction. For example, a scenario may include whether the merchant is liable in case of fraud (2 possibilities), whether a payment instrument authentication was performed (2 possibilities), how many fraud screening were performed (3 possibilities), whether a manual review was performed (2 possibilities), whether in the end the transaction was accepted or rejected (2 possibilities), and whether the requested transaction was fraudulent (2 possibilities). Thus, there are 2x2x3x2x2x2 or 96 scenarios.

The system may calculate the total cost of fraud for a transaction for which the total cost of fraud is deterministic.

| Fraud | Final decision | Challenge with manual review | # of FS calls | # of 3DS calls | Liability |
|---|---|---|---|---|---|
| Yes: 1<br>No: 0 | Accept: 1<br>Deny: 0 | Yes: 1<br>No: 0 | 0<br>1<br>2 | 0<br>1 | Liable: 1<br>Not liable: 0 |

To get the total costs of fraud, the probability of a scenario may be calculated, and the sum of fraud costs per scenario may be associated with this probability.

| Fraud reimbursement | Chargeback processing | Manual review | Lost sales | Fraud screening | 3DS | Merchant fee |
|---|---|---|---|---|---|---|
| *Final decision \*fraud\* liability\* ticket price* | *Final decision \*fraud\* cost of 1 chargeback* | *Challenge with manual review\* Cost of 1 manual review* | *(1-final decision) \*(1-fraud)\* cost of refusing 1 real transaction* | *# of FS calls\* cost of 1 FS call* | *# of 3DS calls\* cost of 1 3DS call* | Ticket price * MSF% (function of liability, FS, strategy in general) |

The expected total costs of fraud may be generated by the summation over all scenarios of the probability multiplied by the associated total cost of fraud.

The table below shows a scenario as an entry in the total costs of fraud database (Scenario 1):

| Merchant liability | 3DS | Number of fraud screenings | Manual review | Final acceptance status | Fraudulent |
|---|---|---|---|---|---|
| Yes | No | 1 | Yes | Allow | No |

For each scenario, the total costs of fraud may be calculated by summing its individual cost components (e.g., those shown above). In the case of the scenario shown above, there will not be fraud reimbursement nor chargeback cost nor 3DS cost, there will be a manual review cost, plus one fraud screening per transaction costs. In this situation, the specific scenario is known, and the system may calculate the total cost of fraud with certainty.

However, it is often the case that we don't know for sure in which scenario we are in, and as such, the system will handle the associated uncertainty. Take the following example: one fraud screening performed by a merchant who is liable for the payment, performs a manual review, and finally decides to accept the payment. If the analysis is performed two weeks later and a chargeback has not been received, it is still unknown whether the payment was fraudulent. This example boils down to a mix of Scenario 1 with a certain probability (the probability that the payment is not fraudulent) and Scenario 2 with the remaining probability.

The table below shows Scenario 2:

| Merchant liability | 3DS | Number of fraud screenings | Manual review | Final acceptance status | Fraudulent |
|---|---|---|---|---|---|
| Yes | No | 1 | Yes | Allow | Yes |

Therefore, the total costs of fraud corresponding to this example can be calculated by weighting the total costs of fraud corresponding to Scenarios 1 and 2 with the right probabilities. These probabilities need to be estimated.

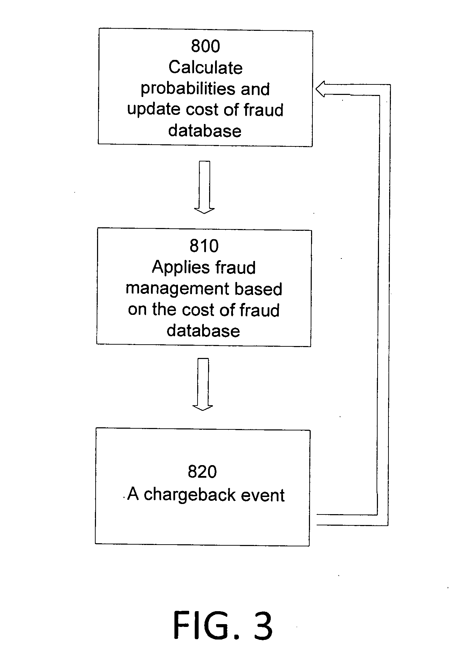

For the estimation, an initial probability of fraud needs to be assessed (probability of fraud just after the acceptance decision). There are two ways to have this initial probability of fraud. Either it is an output of the fraud screening engine (the fraud screening engine may be a predictive one), otherwise it can be inferred from statistics. Indeed, probabilities of fraud may be based on historical data stored in the total costs of fraud database corresponding to the acceptance response (e.g. payment that has been accepted have an average fraud probability of 0.5%). Moreover, the probabilities are updated dynamically. Certain events, such as a chargeback, trigger an update by updating the probability of fraud to 1. Inversely, if week after week a chargeback is still not received, the probability of fraud will converge slowly from its initial value to 0. FIG. 3 illustrates a flow diagram of the process. At 800, the fraud management server calculates probabilities and updates the total costs of fraud database. At 810, the fraud management server applies data in total cost of fraud database for fraud management. At 820, at a certain point in time, the system will evaluate whether a chargeback has taken place or not, which triggers an update of the database at 800 to calculate a probability of fraud.

Moreover, in the case of predicting the efficiency of fraud strategies to be tested, additional components in the table may be uncertain. Indeed, take the example previously mentioned: one fraud screening performed by a merchant who is liable for the payment, performs a manual review, and finally decides to accept the payment. If the user wants to predict the efficiency of a strategy which applied to this payment will perform 3DS then accept the payment if 3DS=OK and reject it if 3DS=KO, the "final acceptance status" also becomes probabilistic because we don't know upfront what would have been the 3DS result. To accommodate these additional uncertainties, some assumptions can be performed on the performance of each fraud screening or information gathering steps (false positives and false negatives of the 3DS, manual review and fraud screening processes; and the probability of manual review given fraud, manual review given not fraud).

In one embodiment, the cost of calculation is not performed for every transaction. For each scenario, the transactions are grouped, and the cost of calculation is performed for the group. For example, transactions may be divided into groups for the transaction value. Using the airline ticket example, groups may include transaction of tickets up to 50 dollars, between 50-100 dollars, between 100-150 dollars, and so forth. The total costs of fraud for a scenario for each group may be calculated by computing the total costs of fraud for one element of the group and multiplying it by the number of elements in the group.

Using such grouping, the time required for total costs of fraud calculation is reduced because it is not performed for each and every transaction.

The fraud management system may further facilitate response time optimization, as the response time of fraud screening may also be reduced utilizing the grouping of transactions. For example, fraud screening is not performed for each and every transaction. By way of sampling, fraud screenings are performed for a number of transactions in the group, but not all, and proportionately to the size of the group. The results of the sample fraud screenings are used as representative of the group.

One way of performing fraud management is by using rules. A rule, for example, is a predetermined condition and n acceptance flow when the predetermined criterion is met (i.e., if the rule is met, then perform corresponding steps). The table below shows some examples of fraud management rules in the context of an airline ticket purchase:

| Predetermined condition: | Acceptance flow: |
| --- | --- |
| Frequent flyer | Allow requested transaction |
| Foreign IP address not matching issuing country of credit card, and cardholder's name not on passenger's list | Reject requested transaction |
| 3D-Secure® result passes | Allow requested transaction |
| 3D-Secure® result does not pass | Perform fraud screening |
| 3D-Secure® result does not pass and the ticket is business class | Reject requested transaction |
| 3D-Secure® result does not pass and the ticket is economy class | Manual review |

Moreover, the efficiency of each rule may be calculated using the total costs of fraud calculation. One such calculation is known as key performance indicator (KPI), which is shown below using the airline ticket example:

$$\text{KPI} = average\ gross\ margin\% - \frac{\sum_{tx\ on\ which\ rule\ is\ applied} fraud\ costs}{\sum_{tx\ on\ which\ rule\ is\ applied} ticket\ value}$$

As shown, the percentage of total costs of fraud cost summed over all tickets on which a rule is applied over the sum of ticket values is calculated, and subtracted from the average gross margin percentage. This KPI represents the net gross margin expected from a transaction on which the rule is applied, by subtracting all fraud related costs percentage from the average gross margin. A higher KPI represents a more efficient rule.

Moreover, for each predetermined condition, a KPI for each acceptance flow may be calculated to determine the best flow, and improve the rule. For example, for a predetermined condition, the acceptance flow may be accept, deny, manual review, and 3D-Secure® authentication. A KPI for every acceptance flow may be calculated to create the most efficient rule.

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

In summary, the invention can be characterized by the following aspects:

    1. A computer-implemented fraud management system comprising:

        a server communicating with a terminal;
        a computer readable medium; and
        a calculation engine;

wherein the computer-implemented fraud screening system:

receives a plurality of transaction requests, and
applies an acceptance flow for each transaction; and

wherein the calculation engine monitors the efficiency of the applied fraud screening system by computing its expected total costs of fraud over all the transactions.

2. The computer-implemented fraud management system of aspect 1, wherein the total costs of fraud is calculated based on at least of one of the following: cost of reimbursing the transaction if fraudulent, chargeback cost of the transaction if fraudulent, cost of manual review, cost of lost sales, cost of performing payment authentications and/or, fraud screenings, probability of the transaction being fraudulent.

3. The computer-implemented fraud management system of aspect 1, wherein the total cost of fraud is not calculated for each of the requested transactions.

4. The computer-implemented fraud management system of aspect 3, wherein the requested transactions are grouped into a plurality of groups of requested transactions; and
wherein the total cost of fraud is calculated for one of the group of requested transactions.

5. The computer-implemented fraud management system of aspect 4, wherein the requested transactions are grouped based on transaction information.

6. The computer-implemented fraud management system of aspect 5, wherein the transaction information includes: a value of the requested transaction and/or a date of the requested transaction.

7. The computer-implemented fraud management system of aspect 5, wherein the requested transactions are grouped further based on one of the following criteria:

the number of fraud screenings performed, the number of payment instrument authentications, whether a manual review was performed, and/or whether the requested transaction was finally allowed.

8. A computer-implemented fraud management system comprising:

a server communicating with a terminal;
a computer readable medium; and
a calculation engine;
wherein the computer-implemented fraud screening system:

receives a plurality of transaction requests, and
applies an acceptance flow for each transaction; and

wherein the calculation engine predicts the efficiency of a new fraud screening system by:

simulating the new fraud screening over certain transactions computing its expected total costs of fraud over all the transactions.

9. The computer-implemented fraud management system of aspect 8, wherein the total costs of fraud is calculated based on at least of one of the following: cost of reimbursing the transaction if fraudulent, chargeback cost of the transaction if fraudulent, cost of manual review, cost of lost sales, cost of performing payment authentications and/or, fraud screenings, probability of the transaction being fraudulent, false positives and negatives of any authentication or manual review processes used in the new fraud screening strategy.

10. The computer-implemented fraud management system of aspect 8, wherein the total cost of fraud is not calculated for each of the requested transactions.

11. The computer-implemented fraud management system of aspect 10, wherein the requested transactions are grouped into a plurality of groups of requested transactions; and

wherein the total cost of fraud is calculated for one of the group of requested transactions.

12. The computer-implemented fraud management system of aspect 11, wherein the requested transactions are grouped based on transaction information.

13. The computer-implemented fraud management system of aspect 12, wherein the transaction information includes: a value of the requested transaction and/or a date of the requested transaction.

14. The computer-implemented fraud management system of aspect 12, wherein the requested transactions are grouped further based on one of the following criteria:

the number of fraud screenings performed, the number of payment instrument authentications, whether a manual review was performed, and/or whether the requested transaction was finally allowed.

15. The computer-implemented fraud management system of aspect 14, wherein the requested transactions are sub grouped based on the criteria to form the groups and the new strategy acceptance flow for the transaction.

16. The computer-implemented fraud management system of aspect 15, wherein a number of total fraud screenings for the new strategy is fixed and is less than the total number of transactions, and wherein sample fraud screenings are performed by allocating this number across members of the subgroups proportionately to the size of these subgroups.

17. A computer-implemented fraud management system comprising:

a server communicating with a terminal; and
a computer readable medium;
wherein the computer-implemented fraud screening system:

comprises a set of mutually exclusive collectively exhaustive predetermined conditions;
receives a number of transaction requests; and
determines an acceptance rule regarding the predetermined conditions using a total costs of fraud database of the received transactions.

18. The computer-implemented fraud management system of aspect 17, wherein the flow of responses includes one of the following:

accepting the requested transaction;
rejecting the requested transaction; and
challenging the requested transaction.

19. The computer-implemented fraud management system of aspect 17, wherein the flow of responses includes performing a payment instrument authentication.

20. The computer-implemented fraud management system of aspect 17, wherein the system modifies the rule for a subsequent requested transaction based on a result of applying the rule.

21. The computer-implemented fraud management method of aspect 17, wherein the total cost of fraud is calculated based on at least of one of the following: cost of reimbursing a fraudulent transaction, chargeback cost of a fraudulent transaction, challenge cost, lost sales, cost of performing the payment authentication, and/or cost of performing the fraud screening.

22. The computer-implemented fraud management method of aspect 17, wherein the total cost of fraud is not calculated for each of the requested transactions.

23. The computer-implemented fraud management method of aspect 17, wherein the requested transactions are grouped into a plurality of groups of requested transactions; and
wherein the total cost of fraud is calculated for one of the group of requested transactions.

24. The computer-implemented fraud management method of aspect 17, wherein the requested transactions are grouped based on transaction information.

25. The computer-implemented fraud management method of aspect 17, wherein the transaction information includes a value of the requested transaction and/or a date of the requested transaction.

26. The computer-implemented fraud management method of aspect 17, wherein the requested transactions are grouped further based on one of the following criteria:

a number of fraud screenings, a number of payment instrument authentication, whether a challenge with manual review is performed, and/or whether the requested transaction is allowed.

27. The computer-implemented fraud management system of aspect 17, wherein the requested transactions are sub grouped based on the criteria to form the groups and the new strategy acceptance flow for the transaction.

28. The computer-implemented fraud management system of aspect 17, wherein a number of total fraud screenings for the new strategy is fixed and is less than the total number of transactions, and wherein sample fraud screenings are performed by allocating this number across members of the subgroups proportionately to the size of these subgroups.

29. A computer-implemented fraud management method comprising:

a
evaluating fraud screening rules with predetermined conditions and corresponding acceptance flows;
receiving a number of transaction requests; and
ranking rules according to their efficiency classification, based on the total cost of fraud.

30. The computer-implemented fraud management method of aspect 29, wherein the total cost of fraud is calculated based on at least of one of the following: cost of reimbursing a fraudulent transaction, chargeback cost of a fraudulent transaction, challenge cost, lost sales, cost of performing the payment authentication, and/or cost of performing the fraud screening.

31. The computer-implemented fraud management method of aspect 29, wherein the total cost of fraud is not calculated for each of the requested transactions.

32. The computer-implemented fraud management method of aspect 29, wherein the requested transactions are grouped into a plurality of groups of requested transactions; and
wherein the total cost of fraud is calculated for one of the group of requested transactions.

33. The computer-implemented fraud management method of aspect 29, wherein the requested transactions are grouped based on transaction information.

34. The computer-implemented fraud management method of aspect 29, wherein the transaction information includes a value of the requested transaction and/or a date of the requested transaction.

35. The computer-implemented fraud management method of aspect 29, wherein the requested transactions are grouped further based on one of the following criteria:

a number of fraud screenings, a number of payment instrument authentication, whether a challenge with manual review is performed, and/or whether the requested transaction is allowed.

36. The computer-implemented fraud management method of aspect 29, wherein the rule efficiency criteria is based on the total cost of fraud, the ticket values and the gross margin of transactions to which the rule applies.

37. A computer-implemented fraud management system comprising:

receiving a plurality of transaction requests;

applying an acceptance flow for each transaction; and
monitoring the efficiency of the applied fraud screening system via a calculation engine by computing its expected total costs of fraud over all the transactions.

38. A computer-implemented fraud management system comprising:

receiving a plurality of transaction requests;
applying an acceptance flow for each transaction; and
predicting the efficiency of a new fraud screening system via a calculation engine by:

simulating the new fraud screening over certain transactions computing its expected total costs of fraud over all the transactions.

39. A computer-implemented fraud management system comprising:

evaluating mutually exclusive collectively exhaustive predetermined conditions;
receiving a number of transaction requests; and
determining an acceptance rule regarding the predetermined conditions using a total costs of fraud database of the received transactions.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A computer-implemented fraud management system comprising:

a server communicating with a terminal;
a computer readable medium; and
a calculation engine;
wherein the computer-implemented fraud screening system is arranged to:

receive a plurality of transaction requests, and
apply an acceptance flow for each transaction; and

wherein the calculation engine is arranged to monitors the efficiency of the applied fraud screening system by computing its expected total costs of fraud over all the transactions.

2. The computer-implemented fraud management system of claim 1, wherein the total costs of fraud is calculated based on at least of one of the following: cost of reimbursing the transaction if fraudulent, chargeback cost of the transaction if fraudulent, cost of manual review, cost of lost sales, cost of performing payment authentications and/or, fraud screenings, probability of the transaction being fraudulent.

3. The computer-implemented fraud management system of claim 1 or claim 2,
wherein the total cost of fraud is not calculated for each of the requested transactions.

4. The computer-implemented fraud management system of any one of claims 1 to 3, wherein the requested transactions are grouped into a plurality of groups of requested transactions; and
wherein the total cost of fraud is calculated for one of the group of requested transactions.

5. The computer-implemented fraud management system of claim 4, wherein the requested transactions are grouped based on transaction information.

6. The computer-implemented fraud management system of any one of the preceding claims, wherein the transaction information includes: a value of the requested transaction and/or a date of the requested transaction.

**7.** The computer-implemented fraud management system of any one of claims 4 to 6, wherein the requested transactions are grouped further based on one of the following criteria:

the number of fraud screenings performed, the number of payment instrument authentications, whether a manual review was performed, and/or whether the requested transaction was finally allowed.

**8.** The computer-implemented fraud management system of any one of the preceding claims, wherein the computer-implemented fraud screening system:

comprises a set of mutually exclusive collectively exhaustive predetermined conditions; and is arranged to determine an acceptance rule regarding the predetermined conditions using a total costs of fraud database of the received transactions.

**9.** The computer-implemented fraud management system of any one of the preceding claims, arranged to either:

accept the requested transaction;
reject the requested transaction; and
challenge the requested transaction.

**10.** The computer-implemented fraud management system of any one of the preceding claims, further arranged to perform a payment instrument authentication.

**11.** The computer-implemented fraud management system of any one of claims 8 to 10, wherein the system is arranged to modify the rule for a subsequent requested transaction based on a result of applying the rule.

**12.** A computer-implemented fraud management method comprising:

evaluating fraud screening rules with predetermined conditions and corresponding acceptance flows;
receiving a number of transaction requests; and
ranking rules according to their efficiency classification, based on the total cost of fraud.

**13.** The computer-implemented fraud management method of claim 12, wherein the total cost of fraud is calculated based on at least of one of the following: cost of reimbursing a fraudulent transaction, chargeback cost of a fraudulent transaction, challenge cost, lost sales, cost of performing the payment authentication, and/or cost of performing the fraud screening.

**14.** The computer-implemented fraud management method of claim 12 or claim 13, wherein the total cost of fraud is not calculated for each of the requested transactions.

**15.** The computer-implemented fraud management method of any one of claims 12 to 14, wherein the requested transactions are grouped into a plurality of groups of requested transactions; and
wherein the total cost of fraud is calculated for one of the group of requested transactions.

FIG. 1

```
                        ┌─────────────────────┐
                        │         700         │
                        │    Fraud Screen     │
                        └─────────────────────┘
```

FIG. 2

800
Calculate
probabilities and
update cost of fraud
database

810
Applies fraud
management based
on the cost of fraud
database

820
A chargeback event

# FIG. 3

Europäisches
Patentamt
European
Patent Office
Office européen
des brevets

# EUROPEAN SEARCH REPORT

Application Number

EP 13 29 0165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/158540 A1 (GANTI VISWESWARARAO [US] ET AL) 21 June 2012 (2012-06-21) * abstract; figures * ----- | 1-15 | INV. G06Q20/02 G06Q20/04 G06Q20/12 |
| X | WO 02/07058 A1 (EBAY INC [US]; MAY JASON [US]; FLINT IAN [US]) 24 January 2002 (2002-01-24) * the whole document * ----- | 1-15 | G06Q30/06 G06Q40/08 G06Q40/02 |

TECHNICAL FIELDS
SEARCHED        (IPC)

G06Q

The present search report has been drawn up for all claims

| Place of search | Date of completion of the search | Examiner |
|---|---|---|
| Munich | 3 December 2013 | Blackley, William |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 29 0165

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2013

| Patent document cited in search report | | Publication date | Patent family member(s) | | Publication date |
|---|---|---|---|---|---|
| US 2012158540 | A1 | 21-06-2012 | NONE | | |
| WO 0207058 | A1 | 24-01-2002 | AU | 6706501 A | 30-01-2002 |
| | | | US | 7610216 B1 | 27-10-2009 |
| | | | US | 2009265211 A1 | 22-10-2009 |
| | | | WO | 0207058 A1 | 24-01-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13786497 B